# EUROPÄISCHE PATENTSCHRIFT

(11) **EP 3 430 696 B1**
(45) Veröffentlichungstag und Bekanntmachung des Hinweises auf die Patenterteilung: **23.06.2021**
(21) Anmeldenummer: 17730040.7
(22) Anmeldetag: 13.03.2017
(51) Int. Cl.: H02G 3/22, H02G 3/32

(54) **KABELHALTERUNG MIT EINEM GRUNDKÖRPER**
CABLE HOLDER COMPRISING A BASE
SUPPORT DE CÂBLES COMPRENANT UN CORPS DE BASE

(30) Priorität: 17.03.2016 DE 102016003203; 25.07.2016 DE 102016009184; 02.09.2016 DE 102016010636
(43) Veröffentlichungstag der Anmeldung: 23.01.2019
(73) Patentinhaber: Tormaxx GmbH, 41199 Mönchengladbach (DE)
(72) Erfinder: KOCH, Hubert, 41199 Mönchengladbach (DE)
(74) Vertreter: Castell, Klaus
(86) Internationale Anmeldenummer: PCT/DE2017/000064
(87) Internationale Veröffentlichungsnummer: WO 2017/157364

(56) Entgegenhaltungen:
- WO-A1-2010/081735
- DE-A1-102010 026 308
- DE-B3-102013 022 351
- DE-U- 1 852 656
- DE-U1-202012 012 435
- US-A- 3 944 177
- US-A- 4 267 995
- Conrad: "Kabelhalter", , 3. Dezember 2008 (2008-12-03), XP055388496, Gefunden im Internet: URL:http://www.produktinfo.conrad.com/date nblaetter/525000-549999/542250-da-01-en-KA BELHALTER_KLEBEND_SCHWARZ_35X18MM.pdf [gefunden am 2017-07-06]

## Beschreibung

Die Erfindung betrifft eine Kabelhalterung mit einem Grundkörper, wobei der Grundkörper eine Kabelführungsrinne aufweist Die Broschüre "Kabelhalter" von Konrad offenbart eine Kabelhalterung mit einem Grundkörper in Form eines Kugelsegmentes. Die Broschüre offenbart keine Membrane und keine eingebetteten Verstärkungsschwerter. Die Dokumente US 4267995A, DE102010026308A1 und WO2010/081735A1 offenbaren Kabelhalterungen mit Membrane. Die Dokumente offenbaren keinen Grundkörper mit einer Form eines Kugelsegmentes und keine eingebetteten Verstärkungsschwerter.

An vielen Stellen werden heute Klebe Pads verwendet, die aus weichen Kunststoffmaterialien derart aufgebaut sind, dass eine Halbkugel auf der Unterseite ein Klebepad aufweist, mit dem die Halterung aufgeklebt werden kann. Die obere Seite ist, bis auf wenige Millimeter getrennt und weist in der Mitte ein Loch auf. So kann das Kabel durch den Trennschnitt von oben durch den Schnitt in die Mitte der Halbkugel gedrückt werden, wo sich das Kabel befindet. Somit ist das Kabel in der Klebehalterung fixiert, weil das Kabel dicker ist als der Öffnungsschlitz.

Wenn aber das Kabel dünner ist als das Loch in der Klebehalterung, ist das Kabel nicht in der Längsrichtung fixiert und fällt so immer wieder durch das Loch nach unten, eine Fixierung ist nur mit zusätzlichen Aufwand möglich, ggf. ist das Kabel durch geeignete Stopper vor oder hinter oder vor und hinter der Klebehalterung zu fixieren.

Der Erfindung liegt daher die Aufgabe zu Grunde, eine Kabelhalterung zu schaffen, die für unterschiedliche Kabeldicken geeignet ist und einfach zu produzieren ist.

Eine erfindungsgemäße neue Lösung ist in Anspruch 1 beschrieben. Vorteilhafte Ausführungsvarianten sind in den Unteransprüchen beschrieben.

Zur Verbesserung des Standes der Technik bei Kabelhalterungen, die auch als Klebepad verwendet werden können, wurde eine Zentriermembrane erfunden, die insbesondere mit entsprechenden Einschnitten und konkaver Wand die Kabel fest in der Längsrichtung fixiert und so ein Herunterfallen der Leitungen oder ein Verrutschen der Leitungen in der Halterung verhindert.

Auch unabhängig von den übrigen Merkmalen der Erfindung ist das Merkmal erfindungswesentlich, nach dem der Grundkörper eine Verstärkungsplatte aufweist, die parallel zur Achse der Führungsrinne angeordnet ist. Wenn die Kabel sehr dick sind, wird die Führungsrinne weit aufgebogen und dies hat zur Folge, dass der Boden in der Mitte auf einer zur Führungsrinne parallelen Achse nach oben gedrückt wird. Dies wirkt auf die Klebeverbindung und kann die Kabelhalterung von der Oberfläche, an der sie angeklebt ist, lösen.

Dies wird dadurch verhindert, dass als Verstärkungsplatte beispielsweise ein Innenkern aus ABS verwendet wird, der von einem weicheren TPU Material zumindest an einer Seite umgossen sein kann. Die Verstärkung wirkt somit wie eine Blattfeder und ist dazu geeignet, den Schlitz der Führungsrinne, in dem die Kabel liegen zuzudrücken. Gleichzeitig kann die Verstärkung den Boden des Kabelhalters bilden, der sich wegen der Festigkeit des ABS nicht mehr durchbiegt und somit auch eine besonders effektive Haftung für die Klebeeinrichtung ermöglicht.

Es zeigt die Figur zwei Ausführungsbeispiele von Kabelhalterungen.

Die Kabelhalterung 1 besteht im Wesentlichen aus dem Grundkörper 2, der eine Kabelführungsrinne 3 aufweist, und der verformbaren Halterung 4.

Der Grundkörper 2 ist aus einem elastisch verformbaren Kunststoff hergestellt, sodass Kabel, deren Querschnitt etwa dem Querschnitt der Kabelführungsrinne 3 entspricht oder größer ist als der Querschnitt der Kabelführungsrinne 3 durch die Elastizität des Grundkörpers 2 gehalten werden. Unabhängig voneinander verformbare Flügel 5, 6, 7 und 8 der Halterung 4 legen sich dabei an die Innenwandung 9 der Kabelführungsrinne 3 an, um das Kabel sicher zu halten.

Sofern das Kabel einen kleineren Querschnitt als die Kabelführungsrinne 3 aufweist, legen sich die Flügel 5, 6, 7 und 8 an das Kabel an und drücken mit ihrer Elastizität geben das Kabel. Dadurch wird das Kabel zur Mitte der Kabelführungsrinne gedrückt und dort gehalten. Um ein Kabel oder mehrere Kabel in der Kabelführungsrinne 3 sicher zu halten, ist der Grundkörper 2 aus elastisch verformbarem Kunststoff hergestellt und auch die verformbare Halterung 4 weist elastisch verformbare Flügel 6, 7 und 8 auf.

Der Grundkörper 2 hat zwei um die Kabelführungsrinne 3 angeordnete Haltearme 10 und 11, die über eine Grundfläche 12 miteinander verbunden sind. Diese Grundfläche 12 weist eine ebene Klebefläche 13 auf, über die der Grundkörper 1 an eine Oberfläche (nicht gezeigt) angeklebt werden kann.

Zur Minimierung des Materialeinsatzes weist der Grundkörper 2 die Form eines Kugelsegmentes mit abgeflachten Seitenflächen 14 und 15 auf. Von den Haltearmen 10 und 11 wird eine Kabelführungsrinne 3 mit kreisförmiger Querschnittsfläche gebildet.

Die Flügel 5, 6, 7 und 8 sind als Membrane ausgebildet, um einerseits für Dicke Kabel den Querschnitt der Kabelführungsrinne nicht zu weit einzuschränken und andererseits dünne Kabel sicher zu halten.

Um die Kabel sicher zu halten, bilden die vier Flügel 5, 6, 7, 8 der Halterung 4 eine konkave Innenseite und eine konvexe Außenseite. Dadurch bilden die Flügel 5, 6, 7, 8 zusammen ein Hohlkugelsegment, das Elastizität und Stabilität miteinander verbindet.

Die Flexibilität der Halterung 4 wird dadurch erzielt, dass zwischen den Flügeln 5, 6, 7 und 8 Einschnitte 16, 17, 18 und 19 vorgesehen sind. Einer dieser Einschnitte 19 erstreckt sich vom Rand der Kabelführungsrinne 3 zu deren Mitte 20, um das Einlegen der Kabel in die Halterung 4 zu erleichtern. Hierfür sind zusätzlich spitzwinklig zueinander angeordnete Lippen 21, 22 vorgesehen, die einen in Richtung der Kabelführungsrinne konisch zusammenlaufenden Einlegespalt bilden.

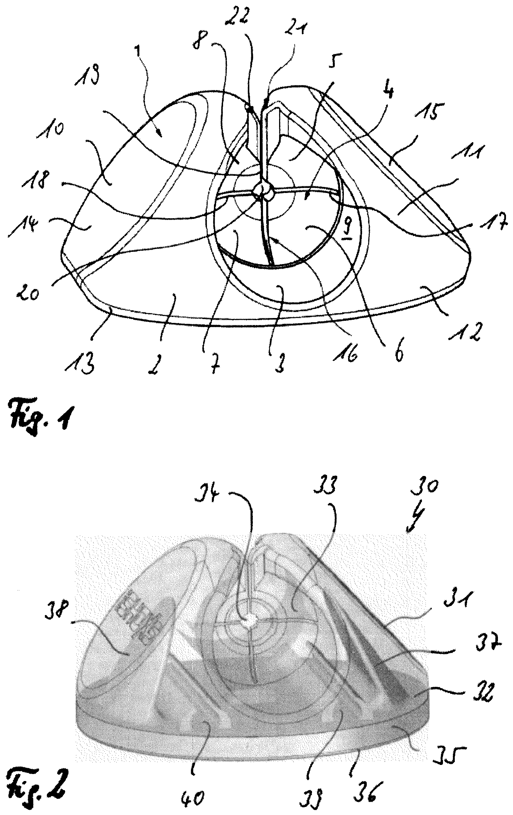

Die in Figur 2 gezeigte Halterung 30 hat einen Grundkörper 31 mit einem Kern aus ABS, der als Verstärkungsplatte 32 unter der Führungsrinne 33 angeordnet ist. Die Verstärkungsplatte 32 ist parallel zur Achse 34 der Führungsrinne 33 angeordnet. Diese Verstärkungsplatte 32 hat einen Boden 35 mit einer Klebefläche 36 und zwei Schwertern 37 und 38 an zwei Seiten der Führungsrinne 33. Zwei leicht gebogene Doppelstege 39 und 40 sorgen für eine stabile Verbindung des ABS-Materials der Verstärkung mit dem TPU Material, das als elastisch verformbarer Kunststoff 41 die Führungsrinne 33 bildet. Diese Doppelstege 39 und 40 verstärken auch die Bodenplatte 35.

## Patentansprüche

1. Kabelhalterung (1) mit einem Grundkörper (2) aus elastisch verformbaren Kunststoff, der die Form eines Kugelsegmentes hat und eine Kabelführungsrinne (3) aufweist, wobei der Grundkörper (31) eine Verstärkungsplatte (32) aufweist, die parallel zur Achse (34) der Führungsrinne (33) angeordnet ist, ***dadurch gekennzeichnet, dass*** in der Kabelführungsrinne (3) eine als Membrane ausgebildete verformbare Halterung (4) angeordnet ist, die Kabel halten kann, deren Querschnittsfläche kleiner ist als die Querschnittsfläche der Kabelführungsrinne (3) und die Verstärkungsplatte (32) , seitlich der Führungsrinne (33) in elastisch verformbarem Kunststoff (41) eingebettete Verstärkungsschwerter (37, 38) aufweist.

2. Kabelhalterung (1) nach Anspruch 1, **dadurch gekennzeichnet, dass** der Grundkörper (2) eine - vorzugsweise runde und plane - Klebefläche (13) aufweist.

3. Kabelhalterung (1) nach einem der vorhergehenden Ansprüche, **dadurch gekennzeichnet, dass** die Halterung (4) als Oberfläche eine konkave Innenseite und eine konvexe Außenseite aufweist.

4. Kabelhalterung (1) nach einem der vorhergehenden Ansprüche, **dadurch gekennzeichnet, dass** die Halterung (4) einen Einschnitt (19) aufweist, der vom Rand zur Mitte der Kabelführungsrinne (3) verläuft.

5. Kabelhalterung (1) nach Anspruch 4, **dadurch gekennzeichnet, dass** der Einschnitt (19) spitzwinklig zueinander angeordnete Lippen (21, 22) aufweist.

6. Kabelhalterung (1) nach Anspruch 4 oder 5, **dadurch gekennzeichnet, dass** sie mehrere radial zum Zentrum (20) der Kabelführungsrinne (3) verlaufende Einschnitte (16, 17, 18, 19) aufweist.

7. Kabelhalterung nach einem der vorhergehenden Ansprüche, **dadurch gekennzeichnet, dass** die Verstärkungsplatte (32) parallel zur Führungsrinne (33) verlaufende Verstärkungsstege (39, 40) aufweist.

## Claims

1. A cable holder (1) having a base body (2) made of elastically deformable plastic, which has the shape of a spherical segment, and a cable guiding channel (3), wherein the base body (31) has a reinforcing plate (32) which is arranged parallel to the axis (34) of the guiding channel (33), ***characterized in that*** a deformable holder (4) configured as a membrane is arranged in the cable guiding channel (3), which holder can hold cables, the cross-sectional area of which is smaller than the cross-sectional area of the cable guiding channel (3), and the reinforcing plate (32) has reinforcing swords (37, 38) embedded in deformable plastic (41) laterally of the guide channel (33).

2. The cable holder (1) according to claim 1, ***characterized in that*** the base body (2) has a - preferably round and plane - adhesive surface (13).

3. The cable holder (1) according to any one of the preceding claims, ***characterized in that*** the holder (4) has a concave inner side and a convex outer side as the surface.

4. The cable holder (1) according to any one of the preceding claims, ***characterized in that*** the holder (4) has an incision (19) which runs from the edge to the center of the cable guiding channel (3).

5. The cable holder (1) according to claim 4, ***characterized in that*** the incision (19) has lips (21, 22) arranged at an acute angle with respect to one another.

6. The cable holder (1) according to claim 4 or 5, ***characterized in that*** it has a plurality of incisions (16, 17, 18, 19) which run radially to the center (20) of the cable guiding channel (3).

7. The cable holder (1) according to any one of the preceding claims, ***characterized in that*** the reinforcing plate (32) has reinforcing webs (39, 40) running parallel to the guide channel (33).

## Revendications

1. Support de câbles (1) comportant un corps de base (2) en matière plastique déformable élastiquement, qui a la forme d'un segment sphérique et présente une rainure de guidage de câbles (3), le corps de base (31) présentant une plaque de renfort (32) qui est disposée parallèlement à l'axe (34) de la rainure de guidage (33), ***caractérisé en ce que,*** dans la rainure de guidage de câbles (3), est disposé un support déformable (4) réalisé sous forme d'une membrane qui peut tenir les câbles dont la surface de section transversale est inférieure à la surface de section transversale de la rainure de guidage de câbles (3) et que la plaque de renfort (32), à côté de la rainure de guidage (33), présente des pointes de renfort (37, 38) noyées dans de la matière plastique déformable élastiquement (41).

2. Support de câbles (1) selon la revendication 1, ***caractérisé en ce que*** le corps de base présente une surface de collage (13), de préférence ronde et plane.

3. Support de câbles (1) selon une des revendications précédentes, ***caractérisé en ce que*** le support (4) présente comme surface une face intérieure concave et une face extérieure convexe.

4. Support de câbles (1) selon une des revendications précédentes, ***caractérisé en ce que*** le support (4) présente une incision (19) qui va du bord au centre de la rainure de guidage de câbles (3).

5. Support de câbles (1) selon la revendication 4, ***caractérisé en ce que*** l'incision (19) présente des lèvres (21, 22) orientées en angle aigu l'une par rapport à l'autre.

6. Support de câbles (1) selon la revendication 4 ou 5, ***caractérisé en ce qu**'*il présente plusieurs incisions (16, 17, 18, 19) orientées radialement par rapport au centre (20) de la rainure de guidage de câbles (3).

7. Support de câbles (1) selon une des revendications précédentes, ***caractérisé en ce que*** la plaque de renfort (32) présente des traverses de renfort (39, 40) orientées parallèlement à la rainure de guidage (33).
